# EUROPÄISCHE PATENTSCHRIFT

(11) **EP 0 830 998 B1**
(45) Veröffentlichungstag und Bekanntmachung des Hinweises auf die Patenterteilung: **20.12.2000**
(21) Anmeldenummer: 97115685.6
(22) Anmeldetag: 10.09.1997
(51) Int. Cl.: B60T 17/18, B60T 13/66

(54) **Elektrische Bremsanlage und Verfahren zum Betreiben einer elektrischen Bremsanlage**
Electrical brake system and process for operating an electrical brake system
Installation électrique de freinage et procédé pour actionner une installation électrique de freinage

(30) Priorität: 21.09.1996 DE 19638759
(43) Veröffentlichungstag der Anmeldung: 25.03.1998
(73) Patentinhaber: Continental Aktiengesellschaft, 30165 Hannover (DE)
(72) Erfinder: Maron, Christof, 30989 Gehrden (DE); Dieckmann, Thomas, Dr., 30982 Pattensen (DE)

(56) Entgegenhaltungen:
- DE-A- 3 916 642
- DE-A- 4 229 041
- US-A- 4 841 158

## Beschreibung

Die Erfindung betrifft eine elektrische Bremsanlage für ein Kraftfahrzeug, die u.a. über folgende Bestandteile verfügt:
- mindestens einen Energieverbraucher
- mindestens eine Recheneinheit
- mindestens eine Spannungsquelle, die mit den Energieverbrauchern verbindbar ist
- eine Zündungsschaltvorrichtung, die bei Anliegen eines Einschaltsignals die Spannungsquelle mit den Energieverbrauchern verbindet.
Die Erfindung betrifft ferner ein Verfahren zum Betreiben einer derartigen elektrischen Bremsanlage für ein Kraftfahrzeug.

Elektrische Bremsanlagen der obengenannten Art sind bereits bekannt und werden auch als Brake-By-Wire-Bremsanlagen bezeichnet. Die elektrischen Bremsanlagen weisen mehrere elektrische Energieverbraucher, wie z.B. mindestens eine Recheneinheit und einen Bremsaktuator für jedes Rad des Kraftfahrzeuges auf. Durch das Anlegen eines Einschaltsignals werden die Energieverbraucher mit einer Spannungsquelle verbunden, so daß die elektrische Bremsanlage funktionstüchtig ist und für Bremsvorgänge bereit steht. Wird daraufhin von einem Kraftfahrzeugfahrer durch Ausüben einer Fußkraft auf ein Bremspedal ein Bremswunsch kundgetan, so wird die Einwirkung der Fußkraft auf das Pedal von einem Sensor erfaßt und in ein elektrisches Signal umgewandelt. Das Signal wird an die Bremsaktuatoren weitergeleitet, und jeder Bremsaktuator übt u.a. mit Hilfe eines Elektromotors eine Bremskraft auf das ihm zugeordnete Rad des Kraftfahrzeugs aus.

Ein Fahrzeug-Bremssteuersystem, das sowohl ein elektrisches Bremssystem als auch ein mechanisches Hilfsbremssystem aufweist, ist aus DE 42 29 041 A bekannt.

Derartige elektrische Bremsanlagen sind an sich als sicher zu bezeichnen, insbesondere auch deswegen, da sie genauso wie herkömmliche Bremsanlagen, zweikreisig ausgebildet sind und somit für jedes elektrische Signal in jedem Bremskreis jeweils ein Kanal vorhanden ist. Kommt es somit zu dem Ausfall eines der Signale bzw. einem der Kanäle und fällt ein Bremskreis infolgedessen aus, so ist immer noch der andere Bremskreis funktionstüchtig und die elektrische Bremsanlage beschränkt einsatzbereit. Es ist jedoch festzustellen, daß es sich bei dem Einschaltsignal um ein einkanaliges Signal handelt. Fällt also das Einschaltsignal aus, z.B. wegen des Abfalls eines Steckers oder wegen des Bruches eines Kabels, auf dem das Einschaltsignal geführt wird, so kommt es zu einem Totalausfall der kompletten elektrischen Bremsanlage (also beider elektrischer Bremskreise) und das Kraftfahrzeug kann nicht mehr gebremst werden. Der Ausfall der elektrischen Bremsanlage ist dann besonders kritisch, wenn das Kraftfahrzeug ansonsten funktionstüchtig ist und sich in Fahrt befindet. Zusammenfassend läßt sich sagen, daß es durch den Ausfall des Einschaltsignals zu einer sicherheitstechnischen Beeinträchtigung des Kraftfahrzeuges kommt, die nicht hinnehmbar ist.

Der Erfindung liegt die Aufgabe zugrunde, eine elektrische Bremsanlage zu schaffen, mit der auch bei einem Ausfall des Einschaltsignals eine sicherheitstechnische Beeinträchtigung des Kraftfahrzeuges vermieden werden kann. Der Erfindung liegt ferner die Aufgabe zugrunde, ein Verfahren zum Betreiben einer derartigen elektrischen Bremsanlage zu schaffen.

Gemäß den kennzeichnenen Merkmalen des Sachanspruchs 1 wird die Aufgabe dadurch gelöst, daß die Zündungsschaltvorrichtung derartig ausgebildet ist, daß bei einem Abfall bzw. Abschalten des Einschaltsignals die Energieverbraucher so lange weiterhin mit der Spannungsquelle verbunden bleiben, bis die Recheneinheit die Trennung der Energieverbraucher von der Spannungsquelle veranlaßt.

Gemäß dem kennzeichnenden Merkmal des nebengeordneten Verfahrensanspruchs 5 wird die Aufgabe dadurch gelöst, daß die Enrgieverbraucher so lange mit der Spannungsquelle verbunden bleiben, bis die Recheneinheit nach einem Abfall bzw. Abschalten des Einschaltsignals die Trennung der Energieverbraucher von der Spannungsquelle veranlaßt.

Unter einem Einschaltsignal soll hier und im folgenden und im einfachsten Fall das Zündungssignal verstanden werden, das durch Betätigung des Zündschlüssels erzeugt wird. Bei dem Einschaltsignal kann es sich aber auch um ein Signal handeln, das erst dann erzeugt wird, wenn das Zündungssignal anliegt und weitere Bedingungen erfüllt sind (eine weitere Bedingung kann z.B. ein ausreichender Ladezustand der Spannungsquelle, die die Energieverbraucher mit elektrischer Energie versorgt, sein).

Der Grundgedanke der Erfindung ist darin zu sehen, daß die Energieverbraucher der elektrischen Bremsanlage zwar aufgrund eines Einschaltsignals mit einer Spannungsquelle verbunden werden, daß die Verbindung der Energieverbraucher mit der Spannungsquelle jedoch unabhängig von dem Einschaltsignal aufrechterhalten bleibt und eine Trennung der Energieverbraucher von der Spannungsquelle nur von der Recheneinheit der elektrischen Bremsanlage veranlaßt werden kann. Bevorzugt wird die Trennung von der Recheneinheit dann veranlaßt, wenn bei fehlendem Eingangssignal feststeht, daß das Fahrzeug außer Betrieb ist.

Die mit der Erfindung erzielten Vorteile sind insbesondere darin zu sehen, daß die volle Funktionstüchtigkeit der elektrischen Bremsanlage unabhängig von dem Anliegen des Einschaltsignals so lange aufrechterhalten bleibt, bis von der Recheneinheit der elektrischen Bremsanlage die Trennung der Energieverbraucher von der Spannungsquelle veranlaßt wird. Kommt es also aus einem beliebigen Grund zu einem Ausfall des Einschaltsignals, so ist die Funktionstüchtigkeit der elektrischen Bremsanlage und damit die Sicherheit des Kraftfahrzeuges nicht beeinträchtigt.

Gemäß einer Weiterbildung der Erfindung ist die Recheneinheit der elektrischen Bremsanlage derart ausgebildet, daß eine Trennung der Energieverbraucher von der Spannungsquelle von der Recheneinheit erst dann veranlaßt wird, wenn bestimmte Kraftfahrzeugparameter, wie z.B. die Raddrehzahl, die Kurbelwellendrehzahl, das Einschaltsignal etc. vorbestimmte Bedingungen erfüllen. Der Vorteil dieser Weiterbildung ist darin zu sehen, daß durch die Überprüfung der Kraftfahrzeugparameter die Fahrzeugsituation sicher erfaßt werden kann und eine Trennung der Energieverbraucher von der Spannungsquelle durch die Recheneinheit erst dann vorgenommen wird, wenn sicher feststeht, daß sich das Kraftfahrzeug nicht im Betrieb befindet (die Recheneinheit kann z.B. "als sicher annehmen", daß sich das Kraftfahrzeug nicht im Betrieb befindet, wenn sich die Räder und die Kurbelwelle des Kraftfahrzeuges nicht drehen und wenn kein Einschaltsignal anliegt).

Gemäß einem bevorzugten Ausführungsbeispiel wird die Überprüfung der vorbestimmten Bedingungen der Kraftfahrzeugparameter von der Recheneinheit selbst vorgenommen, wozu die Recheneinheit mit verschiedenen Sensorsignalen bezüglich der Kraftfahrzeugparameter versorgt wird. Der Vorteil dieses Ausführungsbeispiels ist darin zu sehen, daß, wenn es zu einem Ausfall eines der Sensoren kommt, immer noch die Signale der anderen Sensoren für eine Überprüfung der Fahrzeugsituation zur Verfügung stehen.

Gemäß einer zusätzlichen Weiterbildung der Erfindung veranlaßt die Recheneinheit nach dem Abschalten des Einschaltsignals und vor dem Trennen der Energieverbraucher von der Spannungsquelle noch andere Bedienungen in der elektrischen Bremsanlage, wie z.B. das Anziehen einer elektrischen Feststellbremse oder das Aktivieren einer elektrischen Wegfahrsperre. Der Vorteil dieser Weiterbildung ist darin zu sehen, daß die Steuerung der elektrischen Bremsanlage vollständig "unter Regie" der Recheneinheit steht. Ferner ist es bei dieser Weiterbildung besonders vorteilhaft, wenn die zusätzliche Bedienung der elektrischen Bremsanlage von der Recheneinheit erst dann veranlaßt wird, wenn sich die Recheneinheit zuvor von dem Stillstand des Kraftfahrzeuges "überzeugt hat". In diesem Fall ist nämlich z.B. sichergestellt, daß die elektrische Feststellbremse erst dann "angezogen" wird, wenn sich das Kraftfahrzeug nicht mehr im Betrieb befindet.

Gemäß einem ersten Ausführungsbeispiel der Erfindung ist die Spannungsquelle über einen Versorgungspfad mit den Energieverbrauchern verbindbar, der von der Zündungsschaltvorrichtung bei Anliegen eines Einschaltsignals über einen Schalter geschlossen wird, der nach einem Abschalten des Einschaltsignals so lange geschlossen bleibt, bis die Recheneinheit die Öffnung des Schalters und damit des Versorgungspfades veranlaßt.

Gemäß einem zweiten Ausführungsbeispiel der Erfindung ist die Spannungsquelle der elektrischen Bremsanlage über mindestens einen weiteren Versorgungspfad mit den Energieverbrauchern verbindbar. In diesem Fall werden alle Versorgungspfade bei Anliegen eines Einschaltsignals durch je einen Schalter der Zündungsschaltvorrichtung geschlossen und mindestens einer der Versorgungspfade bleibt nach einem Abschalten des Einschaltsignals so lange weiterhin geschlossen bis die Recheneinheit die Öffnung dieses Versorgungspfades veranlaßt. Der Vorteil dieses Ausführungsbeispiels ist darin zu sehen, daß sich die Sicherheit der elektrischen Bremsanlage weiter erhöht. Kommt es z.B. zu einem Ausfall eines der Schalter, so daß dieser und damit der dazugehörige Versorgungspfad nicht mehr geschlossen werden kann, so bleiben die Energieverbraucher immer noch durch den anderen Schalter und den zweiten Versorgungspfad mit der Spannungsquelle verbunden. Damit bleibt trotz des Ausfalls eines Schalters die vollständige Funktionstüchtigkeit der elektrischen Bremsanlage erhalten.

Weitere Vorteile und ein Ausführungsbeispiel der Erfindung werden im Zusammenhang mit den nachstehenden Figuren erläutert, darin zeigt:
- Figur 1: eine elektrische Bremsanlage in schematischer Darstellung,
- Figur 2: ein Blockschaubild über die Spannungsversorgung der elektrischen Bremsanlage,
- Figur 3: eine Zündungsschaltvorrichtung,
- Figur 4: eine Zündungschaltvorrichtung.

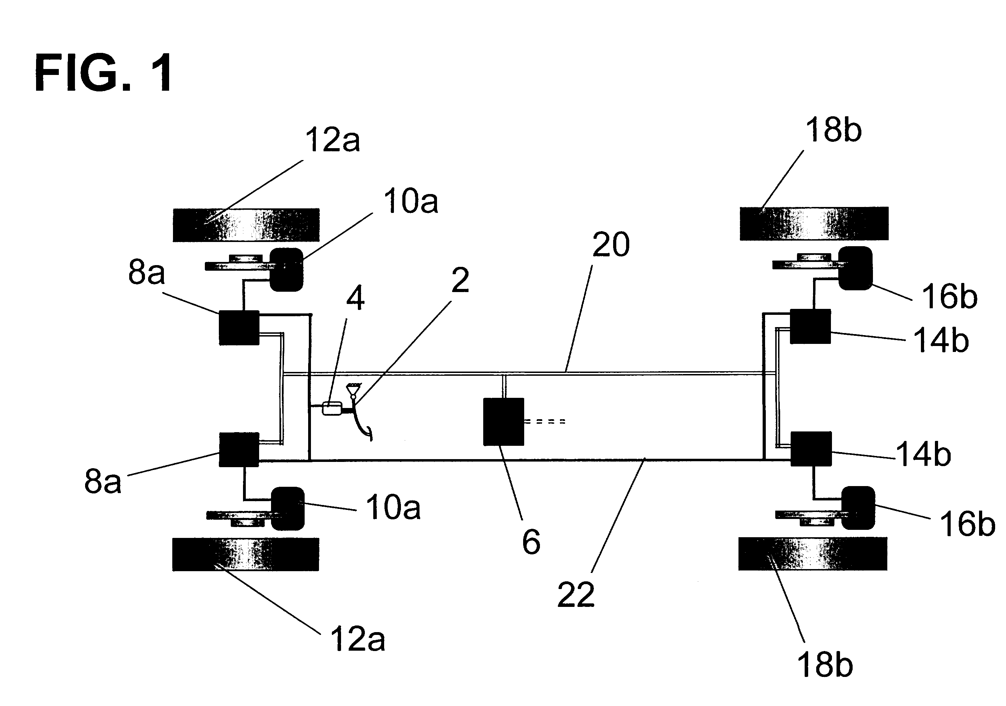

Figur 1 zeigt schematisch eine zweikreisige elektrische Bremsanlage für ein Kraftfahrzeug, wobei nur die für die nachfolgenden Erläuterungen notwendigen Bestandteile dargestellt sind und wobei die Bestandteile des ersten Bremskreises neben den Nummern jeweils ein "a" und die Bestandteile des zweiten Bremskreises neben den Nummern jeweils ein "b" aufweisen. Auf das Bremspedal 2 kann eine dem Bremswunsch des Kraftfahrzeugfahrers entsprechende Fußkraft aufgebracht werden, durch die das Bremspedal 2 bewegt wird. Der zurückgelegte Weg des Bremspedals 2 wird mittels eines Sensors 4 in ein elektrisches Signal umgewandelt, das dem Bremswunsch des Fahrers entspricht. Das elektrische Signal wird über die Signalleitung 22 an die Recheneinheiten 8a des ersten Bremskreises bzw. an die Recheneinheiten 14b des zweiten Bremskreises weitergeleitet. Dort werden aus dem elektrischen Bremsignal Steuersignale erzeugt, die an die Bremsaktuatoren 10a der Vorderachsräder 12a bzw. an die Bremsaktuatoren 16b der Hinterachsräder 18b weitergeleitet werden. Die Bremskatuatoren 10a bzw. 16b werden entsprechend den Steuersignalen aktiviert, was dazu führt, daß an den Vorderachsrädern 12a bzw. an den Hinterachsrädern 18b eine Bremskraft erzeugt wird. Die Recheneinheiten 8a bzw. 14b können über den seriellen Datenbus 20 mit der zentralen Recheneinheit 6 Daten austauschen, deren Bedeutung für das Verständnis der nachfolgenden Erläuterungen jedoch ohne Belang ist.

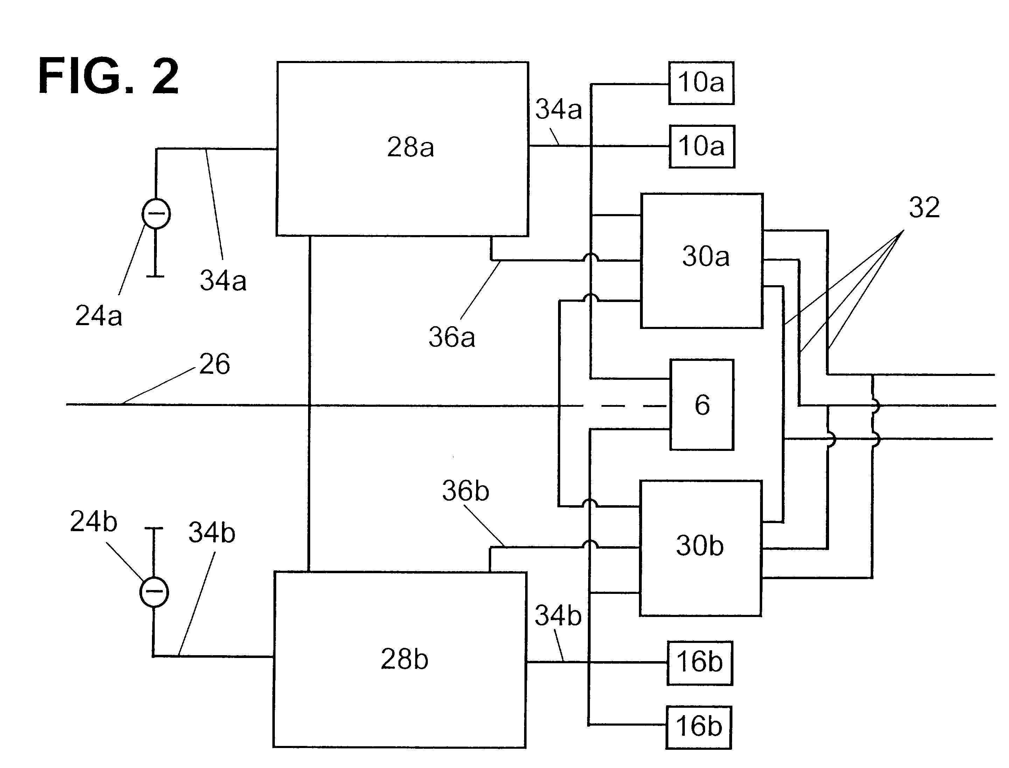

Figur 2 zeigt ein Blockschaubild, in der die Spannungsversorgung der in der Figur 1 gezeigten elektrischen Bremsanlage schematisch dargestellt ist. Auch in der Figur 2 sind die Bestandteile des ersten Bremskreises mit "a" und die Bestandteile des zweiten Bremskreises mit "b" bezeichnet. Die elektrische Bremsanlage verfügt für jeden Bremskreis über eine Spannungsquelle 24a bzw. 24b, die über einen Versorgungspfad 34a bzw. 34b die Bremsaktuatoren 10a bzw. 16b, die Recheneinheiten 30a bzw. 30b (in den Recheneinheiten 30a bzw. 30b sind die Recheneinheiten 8a bzw. 14b zusammengefaßt) und die zentrale Recheneinheit 6 mit Spannung versorgt. Zwischen der Spannungsquelle 24a bzw. 24b und den ebengenannten Energieverbrauchern befindet sich eine Zündungsschaltvorrichtung 28a bzw. 28b. Im folgenden wird anhand der Figur 2 die Spannungsversorgung der elektrischen Bremsanlage erläutert.

Bei Inbetriebnahme des Kraftfahrzeuges wird an die Signalleitung 26 das Einschaltsignal angelegt, und zu der Zündungsschaltvorrichtung 28a bzw. 28b, zu der Recheneinheit 30a bzw. 30b und gegebenenfalls zu der zentralen Recheneinheit 6 geleitet. Daraufhin wird durch die Zündungsschaltvorrichtung 28a bzw. 28b der bis dahin geöffnete Versorgungspfad 34a bzw. 34b geschlossen, so daß die obengenannten Energieverbraucher mit der Spannungsquelle 24a bzw. 24b verbunden werden und somit die elektrische Bremsanlage, d.h. beide Bremskreise, funktionstüchtig sind. Der Versorgungspfad 34a bzw. 34b bleibt so lange geschlossen, bis über die Signalleitung 36a bzw. 36b von den Recheneinheiten 30a bzw. 30b das Öffnen des Versorgungspfades 34a bzw. 34b veranlaßt wird. Insbesondere bleibt der Versorgungspfad 34a bzw. 34b auch dann geschlossen, wenn das Einschaltsignal ausfällt und beispielsweise nicht mehr auf die Zündungsschaltvorrichtung 28a bzw. 28b geführt wird.

Ein Öffnen des Versorgungspfades 34a bzw. 34b wird bevorzugt erst dann veranlaßt, wenn an der Recheneinheit 30a bzw. 30b kein Einschaltsignal mehr anliegt und sicher festgestellt wurde, daß sich das Kraftfahrzeug nicht mehr im Betrieb befindet. Zur sicheren Feststellung werden von der Recheneinheit 30a bzw. 30b ständig bestimmte Kraftfahrzeugparameter, wie z.B. die Raddrehzahl, die Kurbelwellendrehzahl und das Einschaltsignal etc. überwacht. Dazu werden der Recheneinheit 30a bzw. 30b Sensorsignale über dazugehörige Signalleitungen 32 zugeführt, so daß die Sensorsignale ständig in der Recheneinheit 30a bzw. 30b zur Verfügung stehen. Die Recheneinheit 30a bzw. 30b kann z.B. als sicher annehmen, daß sich das Kraftfahfzeug nicht im Betrieb befindet, wenn die Raddrehzahl und die Kurbelwellendrehzahl verschwindet und darüber hinaus kein Einschaltsignal vorhanden ist. In diesem Fall wird von der Recheneinheit 30a bzw. 30b über die Signalleitung 36a bzw. 36b an die Zündungsschaltvorrichtung 28a bzw. 28b der Befehl zum Öffnen des Versorgungspfades 34a bzw. 34b gegeben.

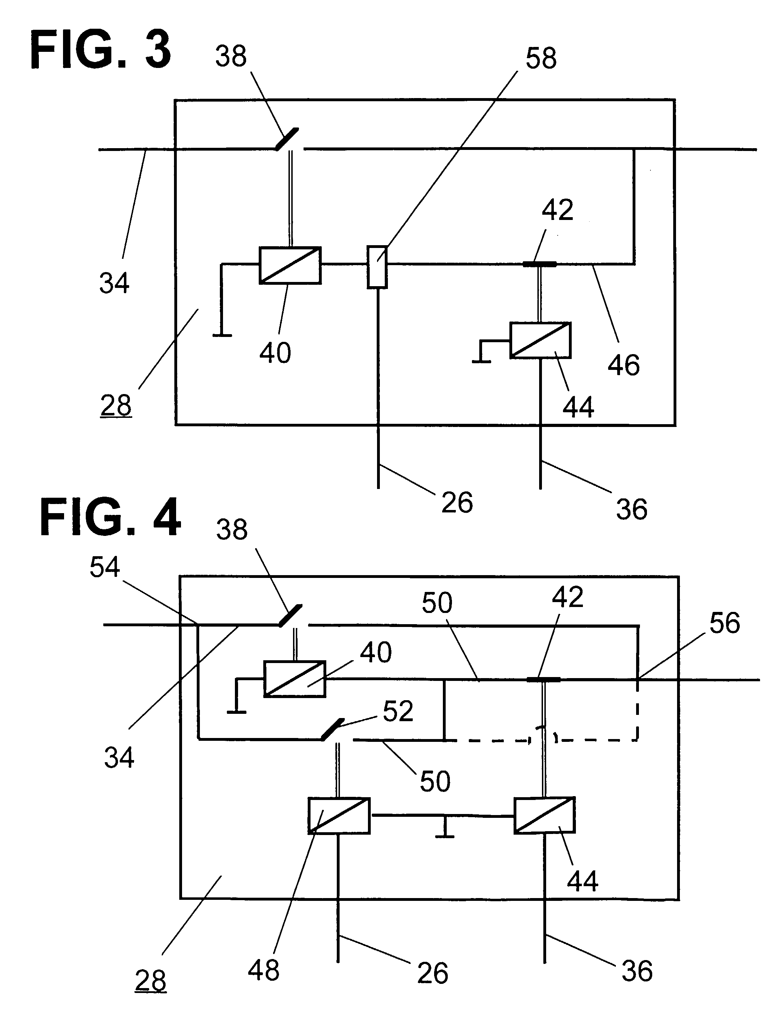

Figur 3 zeigt ein Ausführungsbeispiel für eine Zündungsschaltvorrichtung 28.Die Zündungsschaltvorrichtung 28 verfügt über einen ersten Schalter 38, der bei Anliegen eines Einschaltsignal an der Signalleitung 26 geschlossen wird. Dazu verfügt die Zündungsschaltvorrichtung 28 beispielsweise über ein erstes Relais 40, dessen Spule bei Anliegen eines Einschaltsignals an der Signalleitung 26 stromdurchflossen wird, so daß der Schalter 38 angezogen wird und sich der Versorgungspfad 34 schließt. Die Zündungsschaltvorrichtung verfügt ferner über einen Nebenpfad 46, der den Versorgungspfad 34 mit dem Eingang des ersten Relais vebindet, so daß der Eingang des ersten Relais 40 so lange ständig mit Spannung versorgt wird, wie der erste Schalter 38 geschlossen ist. Die Signalleitung 26 und der Nebenpfad 46 werden über einen Spannungskreisschutzschalter 58 geführt, der die beiden Spannungskreise über die Signalleitung 26 bzw. den Nebenpfad 46 sicher trennt, so daß eine gegenseitige Beeinträchtigung der Spannungskreise ausgeschlossen ist. Kommt es zu einem Abfall bzw. Ausfall des Einschaltsignals an der Signalleitung 26, so ist der Eingang des ersten Relais 40 dennoch über den Nebenpfad 46 mit Spannung versorgt, so daß der erste Schalter 38 weiterhin in seinem "angezogenen Zustand" verbleibt und der Versorgungspfad 34 trotz fehlenden Einschaltsignals geschlossen bleibt (was nichts anderes bedeutet, als daß die Spannungsquelle mit den Energieverbrauchern in der elektrischen Bremsanlage verbunden bleibt). Eine Öffnung des Versorgungspfades 34 ist erst dann möglich, wenn der Nebenpfad 46 unterbrochen und somit der Eingang des ersten Relais 40 nicht mehr mit Spannung versorgt wird. Die Öffnung des Schalters 42 wird von der Recheneinheit 30 veranlaßt, indem auf den Eingang des zweiten Relais 44 über die Signalleitung 36 ein entsprechendes Signal gegeben wird, so daß die Spule des zweiten Relais 44 stromdurchflossen ist und infolgedessen der Schalter 42 angezogen wird und sich der Nebenpfad 46 öffnet. Infolge der Öffnung des Nebenpfades 46 wird der Eingang des ersten Relais nicht mehr mit Spannung versorgt, so daß das erste Relais 40 nicht mehr den Schalter 38 anzieht und sich dieser (und damit der Versorgungspfad 34) öffnet.

Ist die Veranlassung der Öffnung des Versorgungspfades 34 durch die Recheneinheit 30 abgeschlossen, liegt also an der Signalleitung 36 kein Signal und damit an dem Eingang des zweiten Relais 44 keine Spannung mehr an, so wird der Nebenpfad 46 durch den zweiten Schalter 42 wiederum geschlossen, so daß die Zündungsschaltvorrichtung 28 wiederum die in der Figur 3 gezeigte Ausgangsposition annimmt und für ein erneutes Einschalten eines Bremskreises der elektrischen Bremsanlage durch das Einschaltsignal zur Verfügung steht.

Von der in der Figur 3 gezeigten Zündungsschaltvorrichtung 28 werden folgende Einzelfehler toleriert, ohne daß der Versorgungspfad 34 geöffnet wird:
- Es kommt zu einem Ausfall des Einschaltsignals (siehe oben).
- Es kommt zu einer irrtümlichen Ansteuerung des Eingangs des zweiten Relais 44 durch die Recheneinheit 30 über die Signalleitung 36 und infolgedessen zu einer Öffnung des Nebenpfades 46 durch Öffnung des zweiten Schalters 42 (in diesem Fall wird nämlich der Eingang des ersten Relais 40 immer noch durch das Einschaltsignal über die Signalleitung 26 angesteuert, so daß der Schalter 38 und damit der Versorgungspfad 34 geschlossen bleibt).

Figur 4 zeigt ein weiteres Ausführungsbeispiel für eine Zündungsschaltvorrichtung 28. Die gezeigte Zündungsschaltvorrichtung verfügt neben einem ersten Versorgungspfad 34 über einen zweiten Versorgungspfad 50, der beispielsweise zwischen einem ersten Punkt 54 und einem zweiten Punkt 56 angeordnet sein kann. Im folgenden wird die Funktionsweise der Zündungsschaltvorrichtung 28 gemäß Figur 4 erläutert. Bei Anliegen eines Einschaltsignal an der Signalleitung 26 wird über das dritte Relais 48 der dritte Schalter 52 und infolgedessen durch Ansteuerung des ersten Relais 40 der erste Schalter 38 geschlossen. Somit sind die Energieversorger sowohl über den Versorungspfad 34 als auch über den Versorgungspfad 50 mit der Spannungsquelle verbunden. Kommt es bei dem in der Figur 4 gezeigten Ausführungsbeispiel der Zündungsschaltvorrichtung 28 zu einem Abfall bzw. Ausfall des Einschaltsignal an der Signalleitung 26, so wird das dritte Relais 48 nicht mehr angesteuert und infolgedessen öffnet sich der dritte Schalter 52 und somit der Versorgungspfad 50. Die Energieverbraucher bleiben jedoch über den Versorgungspfad 34 mit der Spannungsquelle verbunden, da auch bei einem fehlenden Einschaltsignal an der Leitung 26 der Schalter 38 geschlossen bleibt. Eine Öffnung des Versorgungspfades 34 ist bei fehlendem Einschaltsignal erst dann möglich, wenn der Schalter 42 geöffnet wird und somit der Eingang des ersten Relais 40 nicht mehr mit Spannung versorgt wird. Die Öffnung des Schalters 42 wird nun von der Recheneinheit 30 veranlaßt, indem auf den Eingang des zweiten Relais 44 über die Signalleitung 36 ein entsprechendes Signal gegeben wird, wie es bereits im Zusammenhang mit der Figur 3 erläutert worden ist.

Ist die Veranlassung der Öffnung des Versorgungspfades 34 durch die Recheneinheit 30 abgeschlossen, liegt also an der Signalleitung 36 kein Signal und damit an dem Eingang des zweiten Relais 44 keine Spannung mehr an, so schließt sich wiederum der zweite Schalter 42 und die Zündungsschaltvorrichtung 28 nimmt wiederum die in der Figur 4 gezeigte Ausgangsposition an und steht für ein erneutes Einschalten eines Bremskreises der elektrischen Bremsanlage durch das Einschaltsignal zu Verfügung.

Von der in der Figur 4 gezeigten Zündungsschaltvorrichtung werden folgende Einzelfehler toleriert:
- Es kommt zu einem Ausfall des Einschaltsignals (siehe oben)
- Es kommt zu einer irrtümlichen Ansteuerung des Eingangs des zweiten Relais 44 durch die Recheneinheit 30 über das Signal 36 und infolgedessen zu einer Öffnung des zweiten Schalters 42. (In diesem Fall bleibt nämlich immer noch der erste Schalter 38 und damit der Versorgungspfad 34 wegen des anliegenden Einschaltsignals an der Signalleitung 26 geschlossen).
- Ausfall des ersten Relais 40 zu einem beliebigen Zeitpunkt (in diesem Fall kann der erste Schalter 38 und damit der Versorgungspfad 34 nicht mehr geschlossen werden, eine Verbindung der Energieverbraucher mit der Spannungsquelle ist jedoch nach wie vor über den Versorgungspfad 50 möglich).
- Ausfall des dritten Relais 48 während der Fahrt (in diesem Fall öffnet sich der Schalter 52 und der Versorgungspfad 50. die Energieverbraucher bleiben jedoch über den Versorgungspfad 34 weiterhin mit der Spannungsquelle verbunden, da der Schalter 38 weiterhin geschlossen bleibt).

Gemäß einer Abwandlung der in der Figur 4 gezeigten Zündungsschaltvorrichtung 28 ist es möglich, den zweiten Versorgungspfad 50 erst hinter dem zweiten Relais 44 bzw. hinter dem zweiten Schalter 42 zu dem zweiten Punkt 56 zu führen, so wie es in der Figur 4 durch die strichlinierte Linie angedeutet ist. In diesem Fall wird von der Zündungschaltvorrichtung 28 zusätzlich zu den obengenannten Einzelfehlern ferner der folgende Fehler toleriert:
- Ausfall des ersten Relais 40 zu einem beliebigen Zeitpunkt und gleichzeitig irrtümlich Ansteuerung des Eingangs des zweiten Relais 44 durch die Recheneinheit 30 über die Signalleitung 36, was zu einer Öffnung des Schalters 42 führt (in diesem Fall ist zwar der erste Versorgungspfad 34 geöffnet, dennoch bleiben die Energieverbraucher über den zweiten Versorgungspfad 50 mit der Spannungsquelle verbunden).

Ein weiterer Vorteil dieser Abwandlung ist darin zu sehen, daß der zweite Schalter 42 nicht mehr im Versorgungspfad 50 liegt, über den die Energieverbraucher mit der Spannungsquelle verbunden sind. Aus diesem Grunde kann das zweite Relais 44 klein und preiswert ausgebildet sein.

### Bezugszeichenliste

- 2: Bremspedal
- 4: Sensor
- 6: zentrale Recheneinheit
- 8a: Recheneinheiten der Bremsaktuatoren 10a
- 10a: Bremsaktuatoren der Vorderachsräder 12a
- 12a: Vorderachsräder
- 14b: Recheneinheiten der Bremsaktuatoren 16b
- 16b: Bremsaktuatoren der Hinterachsräder
- 18b: Hinterachsräder
- 20: serieller Datenbus
- 22: Signalleitung von Sensor 4 zu Recheneinheiten 8a, 14b
- 24a, 24b: Spannungsquelle für einen Bremskreis
- 26: Signalleitung für Einschaltsignal
- 28a, 28b: Zündungsschaltvorrichtung für einen Bremskreis
- 30a, 30b: Recheneinheit für einen Bremskreis, in der die Recheneinheiten 8a bzw. 14b zusammengefaßt sind
- 32: Signalleitungen für Sensorsignale
- 34a, 34b: Versorgungspfad
- 36a, 36b: Signalleitung von der Recheneinheit 30a bzw. 30b zu der Zündungsschaltvorrichtung 28a bzw. 28b
- 38: erster Schalter
- 40: erstes Relais
- 42: zweiter Schalter
- 44: zweites Relais
- 46: Nebenpfad
- 48: drittes Relais
- 50: zweiter Versorgungspfad
- 52: dritter Schalter
- 54: erster Punkt
- 56: zweiter Punkt
- 58: Spannungskreisschutzschalter

## Patentansprüche

1. Elektrische Bremsanlage für ein Kraftfahrzeug, die u.a. über folgende Bestandteile verfügt:
- mindestens einen Energieverbraucher (6, 8a, 10a, 14b, 16b)
- mindestens eine Recheneinheit (6, 30a, 30b)
- mindestens eine Spannungsquelle (24a, 24b), die mit den Energieverbrauchern (6, 8a, 10a, 14b, 16b) verbindbar ist
- eine Zündungsschaltvorrichtung (28a, 28b), die bei Anliegen eines Einschaltsignals die Spannungsquelle (24a, 24b) mit den Energieverbrauchern (6, 8a, 10a, 14b, 16b) verbindet, **dadurch gekennzeichnet,** daß die Zündungsschaltvorrichtung (28a, 28b) derart ausgebildet ist, daß bei einem Abfall bzw. Abschalten des Einschaltsignals die Energieverbraucher (6, 8a, 10a, 14b, 16b) solange weiter mit der Spannungsquelle (24a, 24b) verbunden bleiben, bis die Recheneinheit (6, 30a, 30b) die Trennung der Energieverbraucher (6, 8a, 10a, 14b, 16b) von der Spannungsquelle veranlaßt.

2. Elektrische Bremsanlage für ein Kraftfahrzeug nach Anspruch 1, dadurch gekennzeichnet, daß die Recheneinheit (6, 30a, 30b) derart ausgebildet ist, daß eine Trennung der Energieverbraucher (6, 8a, 10a, 14b, 16b) von der Spannungsquelle (24a, 24b) erst dann veranlaßbar ist, wenn bestimmte Kraftfahrzeugparameter, wie z.B. die Raddrehzahl, die Kurbelwellendrehzahl, das Einschaltsignal etc., vorbestimmte Bedingungen erfüllen.

3. Elektrischen Bremsanlage für ein Kraftfahfzeug nach einem der Ansprüche 1 bis 2, dadurch gekennzeichnet, daß die Spannungsquelle (24a, 24b) über einen Versorgungspfad (34a, 34b) mit den Energieverbrauchern (6, 8a, 10a, 14b, 16b, 30a, 30b) verbindbar ist und daß die Zündungsschaltvorrichtung (28a, 28b) bei Anliegen eines Einschaltsignals diesen Versorgungspfad (34a, 34b) schließt und daß der Versorgungspfad (34a, 34b) nach einem Abfall bzw. Abschalten des Einschaltsignals solange geschlossen bleibt, bis die Recheneinheit (6, 30a, 30b) die Öffnung des Versorgungspfades (34a, 34b) veranlaßt.

4. Elektrische Bremsanlage für ein Kraftfahrzeug nach Anspruch 3, dadurch gekennzeichnet, daß die Spannungsquelle (24a, 24b) über mindestens einen weiteren Versorgungspfad mit den Energieverbrauchern (6, 8a, 10a, 14b, 16b, 30a, 30b) verbindbar ist und daß die Zündungsschaltvorrichtung (28a, 28b) bei Anliegen eines Einschaltsignals diesen weiteren Versorgungspfad schließt und daß mindestens einer der Versorgungspfade nach einem Abfall bzw. Abschalten des Einschaltsignals solange geschlossen bleibt, bis die Recheneinheit die Öffnung dieses Versorgungspfades veranlaßt.

5. Verfahren zum Betreiben einer elektrischen Bremsanlage für ein Kraftfahrzeug, die u.a. folgende Bestandteile enthält:
- mindestens einen Energieverbraucher (6, 8a, 10a, 14b, 16b, 30a, 30b)
- mindestens eine Recheneinheit (6, 30a, 30b)
- mindestens eine Spannungsquelle (24a, 24b), die mit den Energieverbrauchern (6, 8a, 10a, 14b, 16b, 30a, 30b) verbindbar ist.
- eine Zündungsschaltvorrichtung (28a, 28b), die bei Anliegen eines Einschaltsignals die Spannungsquelle (24a, 24b) mit den Energieverbrauchern (6, 8a, 10a, 14a, 14b, 30a, 30b) verbindet
dadurch gekennzeichnet, daß die Energieverbraucher (6, 8a, 10a, 14b, 16b, 30a, 30b) solange mit der Spannungsquelle (24a, 24b) verbunden bleiben, bis die Recheneinheit (6, 30a, 30b) nach einem Abschalten des Einschaltsignals die Trennung der Energieverbraucher von der Spannungsquelle veranlaßt.

6. Verfahren zum Betreiben einer elektrischen Bremsanlage für ein Kraftfahrzeug nach Anspruch 5, dadurch gekennzeichnet, daß die Trennung von der Recheneinheit (6, 30a, 30b) erst dann veranlaßt wird, wenn bestimmt Kraftfahrzeugparameter, wie z.B. die Raddrehzahl, die Kurbelwellendrehzahl, das Einschaltsignal etc. vorbestimmte Bedingungen erfüllen.

7. Verfahren zum Betreiben einer elektrischen Bremsanlagefür ein Kraftfahrzeug nach Anspruch 6, dadurch gekennzeichnet, daß die Überprüfung, ob die Kraftfahrzeugparameter vorbestimmte Bedingungen erfüllen, von der Recheneinheit (6, 30a, 30b) vorgenommen wird.

8. Verfahren zum Betreiben einer elektrischen Bremsanlage für ein Kraftfahrzeug nach einem der Ansprüche 5 bis 7, dadurch gekennzeichnet, daß nach dem Abschalten des Einschaltsignals und vor dem Trennen der Energieverbraucher (6, 8a, 10a, 14b, 16b, 30a, 30b) von der Spannungsquelle durch die Recheneinheit (6, 30a, 30b) von der Recheneinheit (6, 30a, 30b) noch andere Bedienungen, wie z.B. das Anziehen einer elektrischen Feststellbremse oder das Aktivieren einer Wegfahrsperre, veranlaßt werden.

## Claims

1. Electrical braking system for an automotive vehicle, which system has, inter alia, the following component parts:
- at least one energy consumer (6, 8a, 10a, 14b, 16b),
- at least one computing unit (6, 30a, 30b),
- at least one voltage source (24a, 24b), which is connectable to the energy consumers (6, 8a, 10a, 14b, 16b), and
- an ignition switching device (28a, 28b), which connects the voltage source (24a, 24b) to the energy consumers (6, 8a, 10a, 14b, 16b) when a switch-on signal is applied,
characterised in that the ignition switching device (28a, 28b) is configured in such a manner that, in the event of the switch-on signal decaying or being switched-off, the energy consumers (6, 8a, 10a, 14b, 16b) continue to remain connected to the voltage source (24a, 24b) until the computing unit (6, 30a, 30b) causes the energy consumers (6, 8a, 10a, 14b, 16b) to be separated from the voltage source.

2. Electrical braking system for an automotive vehicle according to claim 1, characterised in that the computing unit (6, 30a, 30b) is configured in such a manner that the energy consumers (6, 8a, 10a, 14b, 16b) can only be separated from the voltage source (24a, 24b) when specific automotive vehicle parameters, such as, for example, the wheel rotational speed, the crankshaft rotational speed, the switch-on signal, etc., fulfil predetermined conditions.

3. Electrical braking system for an automotive vehicle according to one of claims 1 to 2, characterised in that the voltage source (24a, 24b) is connectable to the energy consumers (6, 8a, 10a, 14b, 16b, 30a, 30b) via a supply path (34a, 34b), and in that the ignition switching device (28a, 28b) closes this supply path (34a, 34b) when a switch-on signal is applied, and in that, after the switch-on signal has decayed or been switched-off, the supply path (34a, 34b) remains closed until the computing unit (6, 30a, 30b) causes the opening of the supply path (34a, 34b).

4. Electrical braking system for an automotive vehicle according to claim 3, characterised in that the voltage source (24a, 24b) is connectable to the energy consumers (6, 8a, 10a, 14b, 16b, 30a, 30b) via at least one additional supply path, and in that the ignition switching device (28a, 28b) closes this additional supply path when a switch-on signal is applied, and in that, after the switch-on signal has decayed or been switched-off, at least one of the supply paths remains closed until the computing unit causes the opening of this supply path.

5. Method of operating an electrical braking system for an automotive vehicle, which system includes, inter alia, the following component parts:
- at least one energy consumer (6, 8a, 10a, 14b, 16b, 30a, 30b),
- at least one computing unit (6, 30a, 30b),
- at least one voltage source (24a, 24b), which is connectable to the energy consumers (6, 8a, 10a, 14b, 16b, 30a, 30b), and
- an ignition switching device (28a, 28b), which connects the voltage source (24a, 24b) to the energy consumers (6, 8a, 10a, 14b, 16b, 30a, 30b) when a switch-on signal is applied,
characterised in that the energy consumers (6, 8a, 10a, 14b, 16b, 30a, 30b) remain connected to the voltage source (24a, 24b) until the computing unit (6, 30a, 30b) causes the energy consumers to be separated from the voltage source after the switch-on signal has been switched-off.

6. Method of operating an electrical braking system for an automotive vehicle according to claim 5, characterised in that the separation is only effected by the computing unit (6, 30a, 30b) when specific automotive vehicle parameters, such as, for example, the wheel speed, the crankshaft speed, the switch-on signal, etc., fulfil predetermined conditions.

7. Method of operating an electrical braking system for an automotive vehicle according to claim 6, characterised in that the computing unit (6, 30a, 30b) effects the monitoring to ascertain whether the automotive vehicle parameters fulfil predetermined conditions.

8. Method of operating an electrical braking system for an automotive vehicle according to one of claims 5 to 7, characterised in that, after the switch-on signal has been switched-off and prior to the energy consumers (6, 8a, 10a, 14b, 16b, 30a, 30b) being separated from the voltage source by the computing unit (6, 30a, 30b), other operations, such as, for example, the tightening of an elecrical parking brake or the activation of a travel stop device, are also effected by the computing unit (6, 30a, 30b).

## Revendications

1. Installation électrique de freinage pour un véhicule, qui dispose entre autres des composants suivants :
- au moins un consommateur d'énergie (6, 8a, 10a, 14b, 16b)
- au moins une unité de calcul (6, 30a, 30b)
- au moins une source de tension (24a, 24b) qui peut se relier aux consommateurs d'énergie (6, 8a, 10a, 14b, 16b)
- un dispositif de mise en circuit de l'allumage (28a, 28b) qui, en présence d'un signal de mise en route, relie la source de tension (24a, 24b) aux consommateurs d'énergie (6, 8a, 10a, 14b, 16b),
caractérisée par le fait que le dispositif de mise en circuit de l'allumage (28a, 28b) est conçu de façon qu'en cas de déficience ou de disparition du signal de mise en route, les consommateurs d'énergie (6, 8a, 10a, 14b, 16b) restent reliés à la source de tension (24a, 24b) jusqu'à ce que l'unité de calcul (6, 30a, 30b) autorise la séparation des consommateurs d'énergie (6, 8a, 10a, 14b, 16b) d'avec la source de tension.

2. Installation électrique de freinage pour un véhicule selon la revendication 1, caractérisée par le fait que l'unité de calcul (6, 30a, 30b) est conçue de façon qu'une séparation des consommateurs d'énergie (6, 8a, 10a, 14b, 16b) d'avec la source de tension (24a, 24b) ne peut être provoquée que lorsque des paramètres déterminés du véhicule, comme par exemple la vitesse de rotation des roues, la vitesse de rotation du vilebrequin, le signal de mise en route, etc. remplissent des conditions prédéterminées.

3. Installation électrique de freinage pour un véhicule selon l'une des revendications 1 à 2, caractérisée par le fait que la source de tension (24a, 24b) peut être reliée aux consommateurs d'énergie (6, 8a, 10a, 14b, 16b, 30a, 30b) par un circuit d'alimentation (34a, 34b) et qu'en présence d'un signal de mise en route, le dispositif de mise en circuit de l'allumage (28a, 28b) ferme ce circuit d'alimentation (34a, 34b) et qu'après une déficience ou une disparition du signal de mise en route, le circuit d'alimentation (34a, 34b) reste fermé jusqu'à ce que l'unité de calcul (6, 30a, 30b) provoque l'ouverture du circuit d'alimentation (34a, 34b).

4. Installation électrique de freinage pour un véhicule selon la revendication 3, caractérisée par le fait que la source de tension (24a, 24b) peut être reliée aux consommateurs d'énergie (6, 8a, 10a, 14b, 16b, 30a, 30b) par au moins un autre circuit d'alimentation et qu'en présence d'un signal de mise en route le dispositif de mise en circuit de l'allumage (28a, 28b) ferme cet autre circuit d'alimentation et qu'après une défaillance ou une disparition du signal de mise en route, au moins l'un des circuits d'alimentation reste fermé jusqu'à ce que l'unité de calcul provoque l'ouverture de ce circuit d'alimentation.

5. Procédé d'utilisation d'une installation électrique de freinage pour un véhicule contenant entre autres les composants suivants :
- au moins un consommateur d'énergie (6, 8a, 10a, 14b, 16b, 30a, 30b)
- au moins une unité de calcul (6, 30a, 30b)
- au moins une source de tension (24a, 24b) qui peut être reliée aux consommateurs d'énergie (6, 8a, 10a, 14b, 16b, 30a, 30b), un dispositif de mise en circuit de l'allumage (28a, 28b) qui, en présence d'un signal de mise en route, relie la source de tension (24a, 24b) aux consommateurs d'énergie (6, 8a, 10a, 14b, 16b, 30a, 30b),
caractérisé par le fait que les consommateurs d'énergie (6, 8a, 10a, 14b, 16b, 30a, 30b) restent reliés à la source de tension jusqu'à ce qu'après une disparition du signal de mise en route, l'unité de calcul (6, 30a, 30b) provoque la séparation des consommateurs d'énergie d'avec la source de tension.

6. Procédé d'utilisation d'une installation électrique de freinage pour véhicule selon la revendication 5, caractérisé par le fait que la séparation n'est provoquée par l'unité de calcul (6, 30a, 30b) que lorsque des paramètres déterminés du véhicule comme par exemple la vitesse de rotation des roues, la vitesse de rotation du vilebrequin, le signal de mise en route etc. remplissent des conditions prédéterminées.

7. Procédé d'utilisation d'une installation électrique de freinage pour véhicule selon la revendication 6, caractérisée par le fait que c'est l'unité de calcul (6, 30a, 30b) qui procède à la vérification indiquant si les paramètres du véhicule remplissent des conditions prédéterminées.

8. Procédé d'utilisation d'une installation électrique de freinage pour véhicule selon l'une des revendications 5 à 7, caractérisé par le fait qu'après la disparition du signal de mise en route et avant la séparation, par l'unité de calcul (6, 30a, 30b), des consommateurs d'énergie (6, 8a, 10a, 14b, 16b, 30a, 30b) d'avec la source de tension, d'autres manoeuvres comme par exemple le serrage d'un frein électrique de parc ou d'un antivol interdisant un déplacement important doivent encore être provoquées par l'unité de calcul (6, 30a, 30b).
